(19) **Europäisches Patentamt**
**European Patent Office**
**Office européen des brevets**

(11) **EP 4 386 231 B1**

(12) **EUROPEAN PATENT SPECIFICATION**

(45) Date of publication and mention
of the grant of the patent:
**06.05.2026 Bulletin 2026/19**

(21) Application number: **23206576.3**

(22) Date of filing: **30.10.2023**

(51) International Patent Classification (IPC):
**F16H 1/32** $^{(2006.01)}$

(52) Cooperative Patent Classification (CPC):
**F16H 1/32**

(54) **ECCENTRIC OSCILLATION TYPE SPEED REDUCER**

DREHZAHLMINDERER VOM EXZENTRISCHEN SCHWINGUNGSTYP

RÉDUCTEUR DE VITESSE DU TYPE À OSCILLATION EXCENTRIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.12.2022 JP 2022199654**

(43) Date of publication of application:
**19.06.2024 Bulletin 2024/25**

(73) Proprietor: **Sumitomo Heavy Industries, Ltd.
Tokyo 141-6025 (JP)**

(72) Inventor: **SHIROUZU, Kenji
Kanagawa, 237-8555, (JP)**

(74) Representative: **Louis Pöhlau Lohrentz
Patentanwälte
Postfach 30 55
90014 Nürnberg (DE)**

(56) References cited:
**EP-A1- 1 340 912        DE-A1- 102021 130 496
JP-A- 2019 056 444        JP-A- 2022 082 891**

**Description**

BACKGROUND OF THE INVENTION

Field of the Invention

The present invention relates to an eccentric oscillation type speed reducer.

Description of Related Art

Japanese Unexamined Patent Publication No. 2022-82891 discloses an eccentric oscillation type speed reducer including an eccentric body, an external gear that is made to oscillate by the eccentric body, an internal gear that meshes with the external gear, an eccentric bearing that is disposed between the external gear and the eccentric body, and a pin body that is synchronized with an axial rotation component of the external gear.

SUMMARY OF THE INVENTION

In a case where the speed reducer is used for use requiring high positioning accuracy, the low lost motion of the speed reducer is required. The inventor has found that there is a problem in that it is difficult to achieve both a low lost motion and a low mechanical loss since a mechanical loss may be increased in a case where a lost motion is set to be low in the eccentric oscillation type speed reducer.
An object of the present invention is to provide an eccentric oscillation type speed reducer in which an increase in mechanical loss can be suppressed while a lost motion is reduced.
An eccentric oscillation type speed reducer according to a certain aspect of the present invention includes an eccentric body, an external gear that is made to oscillate by the eccentric body, an internal gear that meshes with the external gear, an eccentric bearing that is disposed between the eccentric body and the external gear, and a pin body that is synchronized with an axial rotation component of the external gear. The external gear includes a pin hole which is provided to be offset from a center of the external gear in a radial direction and into which the pin body is inserted. In a case where an internal clearance of the eccentric bearing in the radial direction is referred to as an eccentric bearing clearance X1 and a clearance between the pin body and the pin hole in an anti-maximum eccentric direction from an axial center of the pin body in a case where the axial center of the pin body is in a maximum eccentric direction is referred to as a pin hole clearance X2, the pin hole clearance X2 is negative and the following expression (1) is satisfied.

$$\text{Eccentric bearing clearance } X1 + \text{pin hole clearance } X2 > 0 \tag{1}$$

An eccentric oscillation type speed reducer according to another aspect of the present invention includes an eccentric body, an external gear that is made to oscillate by the eccentric body, an internal gear that meshes with the external gear, an eccentric bearing that is disposed between the eccentric body and the external gear, and a pin body that is synchronized with an axial rotation component of the external gear. The external gear includes a pin hole which is provided to be offset from a center of the external gear in a radial direction and into which the pin body is inserted. In a case where an internal clearance of the eccentric bearing in a maximum eccentric direction is referred to as an eccentric bearing clearance X1 and a clearance between the external gear and the internal gear in the maximum eccentric direction is referred to as an inter-tooth clearance X3, the inter-tooth clearance X3 is negative and the following expression (2) is satisfied.

$$\text{Eccentric bearing clearance } X1 + \text{inter-tooth clearance } X3 > 0 \tag{2}$$

According to the present invention, it is possible to provide an eccentric oscillation type speed reducer in which an increase in mechanical loss can be suppressed while a lost motion is reduced.

BRIEF DESCRIPTION OF THE DRAWINGS

Fig. 1 is a side cross-sectional view of an eccentric oscillation type speed reducer according to an embodiment.
Fig. 2 is a partial cross-sectional view of the eccentric oscillation type speed reducer according to the embodiment as viewed in an axial direction.

Fig. 3 is a diagram illustrating an inter-tooth clearance.
Fig. 4 is a diagram relating to Expression (1).
Fig. 5 is a diagram relating to Expression (2).

DETAILED DESCRIPTION OF THE INVENTION

A speed reducer according to an embodiment of the present invention will be described below. The same or equivalent components will be denoted by the same reference numerals and the repeated description thereof will be omitted. In each drawing, for the convenience of description, components will be omitted, enlarged, or reduced as appropriate. The drawings should be viewed according to the direction of a reference numeral.

First, a background leading to an idea of the speed reducer according to the present embodiment will be described. In order to achieve the low lost motion of a speed reducer, attention may be paid to a clearance (hereinafter, referred to as a component clearance) between a movable component of the speed reducer and another component affecting the lost motion and the component clearances may be reduced. The inventor has found that a mechanical loss is increased in the eccentric oscillation type speed reducer in a case where attention is paid to only the component clearance and the component clearance is simply reduced. The inventor has proceeded to study the cause of this. As a result, the inventor has obtained new findings that, in a case where a component clearance between an external gear (movable component) and another component is set to be negative to achieve a low lost motion in the eccentric oscillation type speed reducer, interference may occur between the external gear and an eccentric bearing and an increase in mechanical loss caused by the interference causes a problem.

The inventor has proceeded to further study on the basis of such newly obtained findings. As a result, the inventor has reviewed an idea in which attention is paid to only a component clearance of the speed reducer, and has obtained a new idea that it is effective to pay attention to a relationship between a plurality of component clearances (left-hand sides of Expressions (1) and (2) to be described below). Further, in a case where such a relationship between the component clearances is made to satisfy predetermined conditions (Expressions (1) and (2) to be described below), an increase in mechanical loss can be suppressed while a lost motion is reduced. As a result, the inventor has found that the above-mentioned problem can be solved. A speed reducer made on the basis of such an idea will be described below.

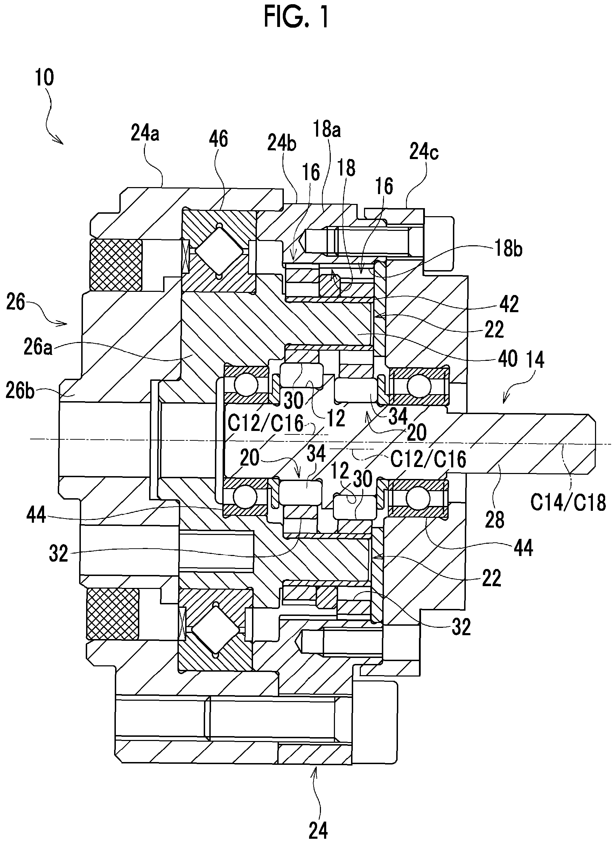

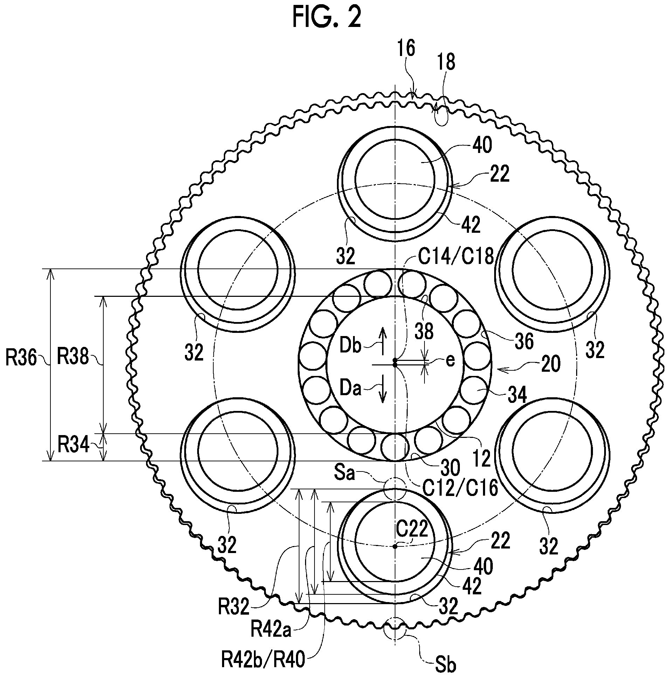

Figs. 1 and 2 will be referred to. An eccentric oscillation type speed reducer 10 (hereinafter, also simply referred to as a speed reducer 10) is incorporated into a driven machine as a part of the driven machine. Examples of the driven machine include various machines, such as industrial machines (a machine tool, a construction machine, and the like), robots (an industrial robot, a service robot, and the like), and transport equipment (a conveyor, a vehicle, and the like).

The eccentric oscillation type speed reducer 10 includes a crankshaft 14 that includes at least one eccentric body 12, external gears 16 that are made to oscillate by the eccentric bodies 12, an internal gear 18 that meshes with the external gears 16, an eccentric bearing 20 that is disposed between each eccentric body 12 and each external gear 16, and pin bodies 22 that are synchronized with axial rotation components of the external gears 16. The speed reducer 10 further includes a casing 24 that is disposed outside the external gears 16 in a radial direction, and a carrier 26 that is disposed on a lateral side of the external gears 16 in an axial direction. In this specification, a direction along a center C18 of the internal gear 18 is referred to as the axial direction, and a circumferential direction and a radial direction having the center C18 as the center of a circle are simply referred to as a circumferential direction and a radial direction.

The speed reducer 10 includes an input member to which input rotation is input from an external drive source, and an output member that outputs output rotation to an external driven member. Here, an example in which the input member is the crankshaft 14 and the output member is the carrier 26 will be described. The drive source is, for example, a motor, but a gear motor, an engine, and the like may be used as the drive source in addition to a motor.

The crankshaft 14 includes a shaft body 28 with which the eccentric bodies 12 are integrated in addition to the eccentric bodies 12. The input rotation input from the drive source is transmitted to the shaft body 28. The eccentric bodies 12 and the shaft body 28 of the present embodiment are formed of the same member, but may be formed separately. An axial center C12 of each eccentric body 12 is eccentric from a rotation center C14 of the crankshaft 14 by an eccentric distance e. The cross-section of each eccentric body 12 perpendicular to an axis thereof has a circular shape that has the axial center C12 as a center. In a case where the number of the eccentric bodies 12 is set to M (two in the present embodiment), eccentric phases of the plurality of eccentric bodies 12 are shifted from each other by 360°/M. The number of the eccentric bodies 12 is not particularly limited, and one or three or more eccentric bodies 12 may be provided.

Each external gear 16 is individually provided to correspond to each of the plurality of eccentric bodies 12, and is supported by each eccentric body 12 to be relatively rotatable via the individual eccentric bearing 20. Each external gear 16 includes an eccentric bearing hole 30 that is provided at a center C16 of the external gear 16, and a plurality of pin holes 32 that are provided to be offset from the center C16 in the radial direction. The eccentric bearing 20 is disposed in the eccentric bearing hole 30. The plurality of pin holes 32 are provided around the eccentric bearing hole 30 at intervals in the circumferential direction. The individual pin body 22 is inserted into each of the plurality of pin holes 32.

The internal gear 18 includes an internal gear main body 18a that is integrated with the casing 24, and an internal tooth portion 18b that is provided on an inner peripheral portion of the internal gear main body 18a. The internal tooth portion 18b of the present embodiment is integrated with the internal gear main body 18a, but may be formed of outer pins that are rotatably supported by the internal gear main body 18a.

The eccentric bearing 20 includes a plurality of rolling elements 34, an outer rolling contact surface 36 on which the rolling elements 34 roll, an inner rolling contact surface 38 on which the rolling elements 34 roll, and a retainer (not shown) that holds the relative positions of the plurality of rolling elements 34. The rolling element 34 of the present embodiment is a roller, but various rolling elements, such as a sphere, may be used as the rolling element 34. The external gear 16 also serves as an outer ring of the eccentric bearing 20 of the present embodiment, and the eccentric bearing hole 30 of the external gear 16 is provided with the outer rolling contact surface 36. In addition, the eccentric bearing 20 may include a dedicated outer ring and the outer ring of the eccentric bearing 20 may be provided with the outer rolling contact surface 36. The eccentric body 12 also serves as an inner ring of the eccentric bearing 20 of the present embodiment, and an outer peripheral surface of the eccentric body 12 is provided with the inner rolling contact surface 38. In addition, the eccentric bearing 20 may include a dedicated inner ring and the inner ring of the eccentric bearing 20 may be provided with the inner rolling contact surface 38. A so-called full roller type bearing without a retainer may be employed as the eccentric bearing 20.

The plurality of pin bodies 22 are provided at positions offset from the center C18 of the internal gear 18 in the radial direction at intervals in the circumferential direction of the internal gear 18. The pin bodies 22 penetrate the pin holes 32 of the external gear 16 in the axial direction. Each pin body 22 includes a pin 40 that is integrated with the carrier 26 and a roller 42 that is disposed on an outer peripheral side of the pin 40. The pin 40 protrudes from the carrier 26 in the axial direction. The pin 40 of the present embodiment is formed as a part of the same member as the carrier 26 (a first carrier member 26a to be described below), but may be formed separately from the carrier 26. The roller 42 is a tubular member that is rotatably supported by the pin 40, and can be in rolling contact with both the pin 40 and the pin hole 32 of the external gear 16.

In a case where the speed reducer 10 is operated, the pin bodies 22 transmit a load to and from the pin holes 32 of the external gears 16 and is synchronized with the axial rotation components of the external gears 16. "Synchronized with the axial rotation components" mentioned here means that the axial rotation components of the external gears 16 and the revolution components of the pin bodies 22 are maintained at the same magnitude within a numerical range including zero. For example, in a case where the external gears 16 rotate, the pin bodies 22 revolve with revolution components having the same magnitude as the axial rotation component of the external gear 16. Accordingly, the pin bodies 22 are synchronized with the axial rotation components of the external gears 16. In this case, the axial rotation components of the external gears 16 are transmitted to the carrier 26 via the pin bodies 22, and the carrier 26 serves as an output member and outputs output rotation. On the other hand, in a case where the internal gear 18 rotates, the rotation of the external gears 16 is restrained by the carrier 26 and the pin bodies 22. Accordingly, the axial rotation components of the external gears 16 are maintained at zero. In this case, the revolution components of the pin bodies 22 are maintained at zero, so that the pin bodies 22 are synchronized with the axial rotation components of the external gears 16. In this case, the axial rotation component of the internal gear 18 is transmitted to the casing 24, and the casing 24 serves as an output member and outputs output rotation. Each pin body 22 may not include the roller 42.

The carrier 26 of the present embodiment is disposed on only one side in the axial direction. In addition, another carrier 26 may be disposed on the other side in the axial direction. The carrier 26 supports the crankshaft 14 via a bearing 44 such that the crankshaft 14 is rotatable. The carrier 26 is formed of a combination of a plurality of (here, two) carrier members 26a and 26b. The carrier members 26a and 26b of the present embodiment include a first carrier member 26a that supports the bearing 44, and a second carrier member 26b that is connected to the first carrier member 26a.

The casing 24 is formed of a combination of a plurality of (here, three) casing members 24a to 24c. A main bearing 46 is disposed between the casing 24 and the carrier 26. The casing members 24a to 24c include a first casing member 24a that supports the main bearing 46, a second casing member 24b that is provided with the internal gear 18, and a third casing member 24c that supports the crankshaft 14 via a bearing 44 such that the crankshaft 14 is rotatable.

An operation of the above-mentioned speed reducer 10 will be described. The crankshaft 14 is rotated due to the input rotation input from the drive source. In a case where the crankshaft 14 is rotated, the eccentric bodies 12 of the crankshaft 14 cause the external gears 16 to oscillate such that the centers C16 of the external gears 16 rotate around the center C18 of the internal gear 18. In a case where the external gears 16 oscillate, positions at which the external gears 16 mesh with the internal gear 18 change in the circumferential direction. Accordingly, whenever the crankshaft 14 is rotated once, one of each external gear 16 and the internal gear 18 rotates by a difference in the number of teeth between the external gear 16 and the internal gear 18 and the axial rotation component thereof is transmitted to an output member as output rotation. Here, the external gears 16 rotate and the axial rotation components of the external gears 16 are transmitted to the carrier 26 serving as an output member via the pin bodies 22. A reduction ratio, which is a ratio of the output rotation to the input rotation, has a magnitude corresponding to a difference in the number of teeth between the external gear 16 and the internal gear 18.

Fig. 2 will be referred to. On a half-line that extends from the rotation center C14 of the crankshaft 14 and passes through the axial center C12 of the eccentric body 12, a direction from the rotation center C14 toward the axial center C12 is referred to as a maximum eccentric direction Da and a direction opposite to the maximum eccentric direction Da is referred to as an anti-maximum eccentric direction Db. The axial center C12 of the eccentric body 12 is a geometric center (center of gravity) of a shape that is formed by the outer peripheral surface of the eccentric body 12 in a cross-section perpendicular to the axial direction passing through the eccentric body 12.

An eccentric bearing clearance X1, a pin hole clearance X2, and an inter-tooth clearance X3 will be described as specific examples of the above-mentioned component clearances. Unless otherwise specified below, a positional relationship of various components as viewed in the axial direction will be described. Further, both "outer diameter" and "inner diameter" of each component mean a diameter unless otherwise specified.

The eccentric bearing clearance X1 refers to an internal clearance of the eccentric bearing 20 in the radial direction. The eccentric bearing clearance X1 is also an internal clearance of the eccentric bearing 20 on the half-line extending from the rotation center C14 of the crankshaft 14 in the maximum eccentric direction Da.

The pin hole clearance X2 refers to a clearance (a clearance in a range Sa of Fig. 2) between an pin body 22 and the pin hole 32 in the anti-maximum eccentric direction Db from an axial center C22 of the pin body 22 in a case where the axial center C22 of the pin body 22 is in the maximum eccentric direction Da. "The axial center C22 of the pin body 22 is in the maximum eccentric direction Da" mentioned here means that the axial center C22 of the pin body 22 is on the half-line extending from the rotation center C14 of the crankshaft 14 in the maximum eccentric direction Da. "A clearance between an pin body 22 and the pin hole 32 in the anti-maximum eccentric direction Db from an axial center C22 of the pin body 22" refers to a clearance between the pin body 22 and the pin hole 32 that may occur on the half-line extending from the axial center C22 of the pin body 22 in the anti-maximum eccentric direction Db. In a case where each pin body 22 includes the pin 40 and the roller 42, a clearance between the pin 40 and the roller 42, which may occur on the half-line, is also included in "the clearance between the pin body 22 and the pin hole 32" mentioned here.

The inter-tooth clearance X3 refers to a clearance (a clearance in a range Sb of Fig. 2) between the external gear 16 and the internal gear 18 in the maximum eccentric direction Da. "A clearance ... in the maximum eccentric direction Da" mentioned here refers to a clearance between the external gear 16 and the internal gear 18 that may occur on the half-line extending from the rotation center C14 of the crankshaft 14.

An inner diameter R36 of the outer rolling contact surface 36 of the eccentric bearing 20, an outer diameter R34 of the rolling element 34 of the eccentric bearing 20, and an outer diameter R38 of the inner rolling contact surface 38 of the eccentric bearing 20 are assumed. In this case, the eccentric bearing clearance X1 is specified by the following equation (A).

$$\text{Eccentric bearing clearance X1} = (\text{inner diameter R36 of outer rolling contact surface 36} - 2 \times \text{outer diameter R34 of rolling element 34} - \text{outer diameter R38 of inner rolling contact surface 38}) / 2 \qquad \text{Equation (A)}$$

An inner diameter R32 of the pin hole 32, an outer diameter R42a of the roller 42, an inner diameter R42b of the roller 42, an outer diameter R40 of the pin 40, and an eccentric distance e of the eccentric body 12 are assumed. The eccentric distance e refers to a distance between the rotation center C14 of the crankshaft 14 and the axial center C12 of the eccentric body 12. In this case, the pin hole clearance X2 is specified by the following equation (B). In a case where there is no roller 42, a numerical value related to the roller 42 is set to zero for handling.

$$\text{Pin hole clearance X2} = (\text{inner diameter R32 of pin hole 32} - \text{outer diameter R42a of roller 42} - 2 \times \text{eccentric distance e}) / 2 + (\text{inner diameter R42b of roller 42} - \text{outer diameter R40 of pin 40}) / 2 \qquad \text{Equation (B)}$$

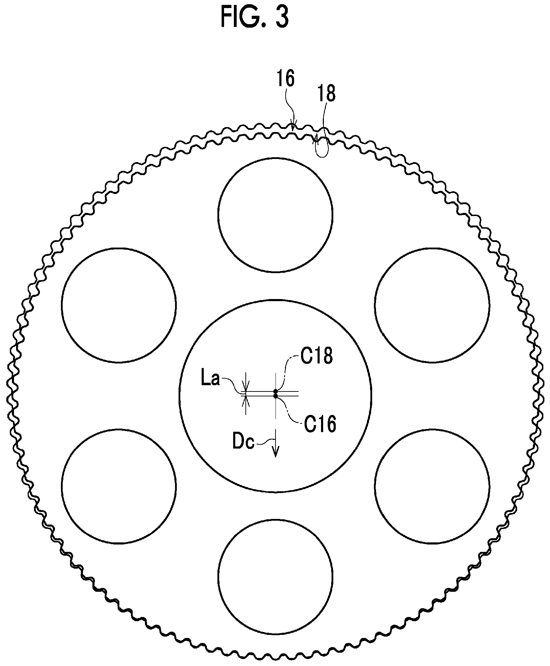

Fig. 3 will be referred to. A value, which is specified according to the following measurement procedure, is used as the inter-tooth clearance X3. The following measurement work is performed under an environment of room temperature (20°C). First, the external gear 16 is disposed inside the internal gear 18 in the radial direction in a state where the pin bodies 22 and the eccentric body 12 (crankshaft 14) are not present. Then, the external gear 16 is lightly pressed against the internal gear 18 in a direction Dc toward the outer side in the radial direction. In this case, in a state where a tooth surface of an external tooth portion of the external gear 16 is in contact with a tooth surface of the internal tooth portion of the internal gear 18, a light force not causing the deformation of the external gear 16 and the internal gear 18 is applied to press the external gear 16 against the internal gear 18. At this time, until the positional deviation of the external gear 16 with respect to the internal gear 18 in the radial direction is eliminated, the external gear 16 is moved in the direction Dc while being slightly shifted in the circumferential direction. In this case, the external gear 16 and the internal gear 18 are caused to be in contact with each other in an axial range in which the external gear 16 and the internal gear 18 overlap with each other in the radial direction such that a clearance allowing the positional deviation of the external gear 16 in the direction Dc toward the outer side in the radial direction is removed between both the external gear 16 and the internal gear 18. In a state where the external gear 16 is pressed against the internal gear 18 as described above, a center-to-center distance La, which is a distance between the center C16 of the external gear 16 and the center C18 of the internal gear 18, is measured by a three-coordinate measuring machine. In this case, the inter-tooth clearance X3 is specified by the following equation (C).

Inter-tooth clearance X3 = center-to-center distance La - eccentric distance e          Equation (C)

The speed reducer 10 is adapted to satisfy a first condition in which the pin hole clearance X2 is negative and the following expression (1) is satisfied. An absolute value of the positive eccentric bearing clearance X1 is set to be larger than an absolute value of the negative pin hole clearance X2.

Eccentric bearing clearance X1 + pin hole clearance X2 > 0          Equation (D)

A fact that the pin hole clearance X2 is negative means that, in a case where it is assumed that the external gear 16 and the pin body 22 are not moved, there is no play (positive clearance) between the pin body 22 and the pin hole 32 and a negative clearance causing the external gear 16 or the pin body 22 to be stuck by a length of the pin hole clearance X2 is formed. The reason why a negative pin hole clearance X2 is used as a condition is to make the pin hole clearance X2 negative to reduce a lost motion as much as possible.

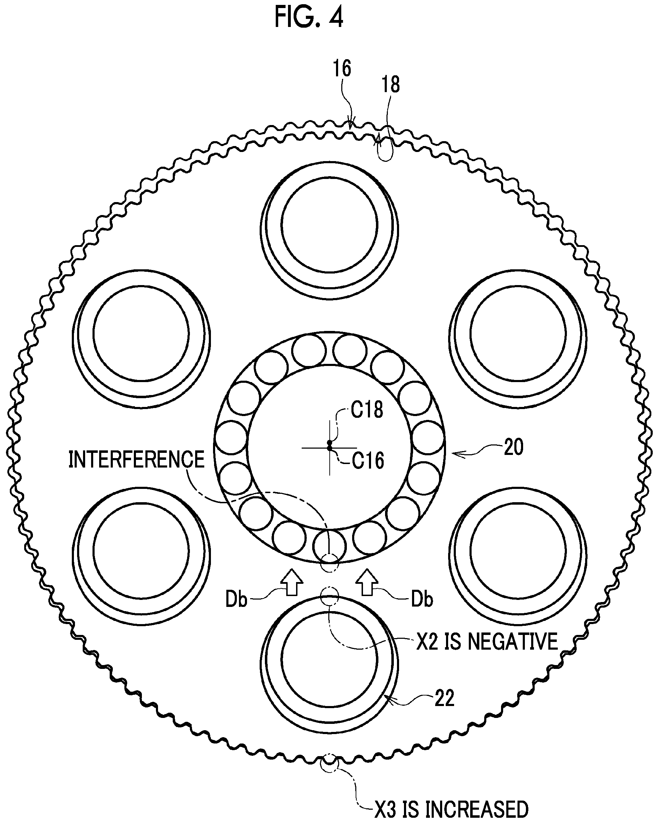

The reason why Expression (1) is used as a condition will be described. Fig. 4 will be referred to. In a case where the pin hole clearance X2 is set to be negative, the external gear 16 is to be moved in the anti-maximum eccentric direction Db by a length of the pin hole clearance X2. At this time, in a case where Expression (1) is not satisfied, that is, in a case where the pin hole clearance X2 is negative and the left-hand side of Expression (1) is negative, the external gear 16 cannot be moved in the anti-maximum eccentric direction Db by a length of the pin hole clearance X2. As a result, the external gear 16 and the eccentric bearing 20 interfere with each other. In this case, a preload is applied to the external gear 16 between the pin body 22 and the eccentric bearing 20, so that a mechanical loss is increased.

On the other hand, in a case where Expression (1) is satisfied, that is, in a case where the absolute value of the positive eccentric bearing clearance X1 is larger than the absolute value of the negative pin hole clearance X2, the minute movement of the external gear 16 in the anti-maximum eccentric direction Db by a length of the pin hole clearance X2 can be allowed. Accordingly, even in a case where the pin hole clearance X2 is set to be negative to achieve a low lost motion, an increase in mechanical loss caused by interfere between the external gear 16 and the eccentric bearing 20 can be avoided. As a result, it is possible to suppress an increase in mechanical loss between the external gear 16 and the eccentric bearing 20 while reducing a lost motion.

In a case where the first condition in which the following expression (1) is satisfied while the pin hole clearance X2 is set to be negative is satisfied, an actual inter-tooth clearance X3 is larger than the inter-tooth clearance X3 specified from the above-mentioned equation (C). For this reason, an increase in mechanical loss between the external gear 16 and the internal gear 18 can also be suppressed.

The speed reducer 10 is adapted such that the inter-tooth clearance X3 is negative and the following expression (2) is satisfied. An absolute value of the positive eccentric bearing clearance X1 is set to be larger than an absolute value of the negative inter-tooth clearance X3.

Eccentric bearing clearance X1 + inter-tooth clearance X3 > 0          (2)

A fact that the inter-tooth clearance X3 is negative means that, in a case where it is assumed that the external gear 16 and the internal gear 18 are not moved, play (positive clearance) is not formed between the external gear 16 and the internal gear 18 and a negative clearance causing the external gear 16 and the internal gear 18 to be stuck by a length of the inter-tooth clearance X3 is formed. The reason why a negative inter-tooth clearance X3 is used as a condition is to make the inter-tooth clearance X3 negative to reduce a lost motion as much as possible.

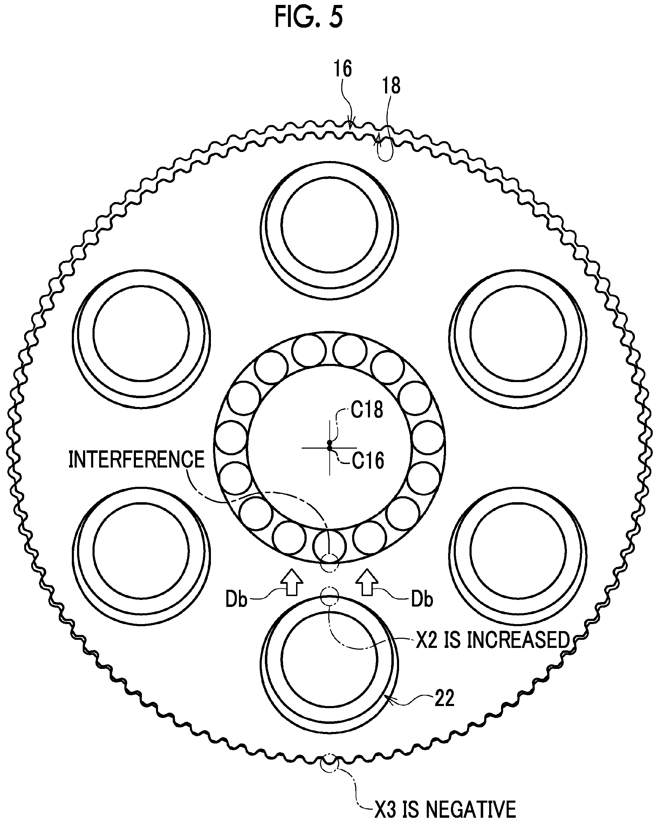

The reason why Expression (2) is used as a condition will be described. Fig. 5 will be referred to. In a case where the inter-tooth clearance X3 is negative, the external gear 16 is to be moved in the anti-maximum eccentric direction Db by a length of the inter-tooth clearance X3. At this time, in a case where Expression (2) is not satisfied, that is, in a case where the inter-tooth clearance X3 is negative and the left-hand side of Expression (2) is negative, the external gear 16 cannot be moved in the anti-maximum eccentric direction Db. As a result, the external gear 16 and the eccentric bearing 20 interfere with each other. In this case, a preload is applied to the external gear 16 between the internal gear 18 and the eccentric bearing 20, so that a mechanical loss is increased.

On the other hand, in a case where Expression (2) is satisfied, that is, in a case where the absolute value of the positive eccentric bearing clearance X1 is larger than the absolute value of the negative inter-tooth clearance X3, the minute movement of the external gear 16 in the anti-maximum eccentric direction Db by a length of the inter-tooth clearance X3 can be allowed. Accordingly, even in a case where the inter-tooth clearance X3 is set to be negative to achieve a low lost motion, an increase in mechanical loss caused by interfere between the external gear 16 and the eccentric bearing 20 can be avoided. As a result, it is possible to suppress an increase in mechanical loss between the external gear 16 and the eccentric bearing 20 while reducing a lost motion.

In a case where a second condition in which the following expression (2) is satisfied while the inter-tooth clearance X3 is set to be negative is satisfied, an actual pin hole clearance X2 is larger than the pin hole clearance X2 specified from the above-mentioned equation (B). For this reason, an increase in mechanical loss between the pin body 22 and the external gear 16 can also be suppressed.

At least one of the plurality of diameters shown in Equation (A) may be adjusted in the adjustment of the eccentric bearing clearance X1. At least one of the plurality of diameters and the eccentric distance e shown in Equation (B) may be adjusted in the adjustment of the pin hole clearance X2. At least one of the shape of the external tooth portion of the external gear 16, the shape of the internal tooth portion of the internal gear 18, and the eccentric distance e may be adjusted in the adjustment of the inter-tooth clearance X3.

Numerical ranges of the eccentric bearing clearance X1, the pin hole clearance X2, and the inter-tooth clearance X3 are set within realistic numerical ranges applied to the speed reducer 10, and specific magnitudes thereof are not particularly limited. For example, the eccentric bearing clearance X1 is more than zero and 15 $\mu$m or less and preferably more than zero and 10 $\mu$m or less. Further, the pin hole clearance X2 is -10 $\mu$m or more and less than zero and preferably -5 $\mu$m or more and less than zero. Furthermore, the inter-tooth clearance X3 is -10 $\mu$m or more and less than zero and preferably -5 $\mu$m or more and less than zero. Further, numerical values of the left-hand sides of Expressions (1) and (2) are set within the numerical range of the same order as that of the eccentric bearing clearance X1 and the like, and specific magnitudes thereof are not particularly limited. For example, the left-hand side of Expression (1) is more than zero and 10 $\mu$m or less and preferably more than zero and 5 $\mu$m or less. The left-hand side of Expression (2) is more than zero and 10 $\mu$m or less and preferably more than zero and 5 $\mu$m or less.

Advantageous effects of the above-mentioned speed reducer 10 will be described.

The speed reducer 10 according to the present embodiment is adapted to satisfy the first condition in which Expression (1) greatly affecting a mechanical loss is satisfied while the pin hole clearance X2 is set to be negative, in order to achieve a low lost motion. Accordingly, it is possible to realize an eccentric oscillation type speed reducer in which an increase in mechanical loss is suppressed while a lost motion is reduced as described above as compared to a case where Expression (1) is not satisfied while the pin hole clearance X2 is set to be negative.

The speed reducer 10 according to the present embodiment is adapted to satisfy the second condition in which Expression (2) greatly affecting a mechanical loss is satisfied while the inter-tooth clearance X3 is set to be negative, in order to achieve a low lost motion. Accordingly, it is possible to realize an eccentric oscillation type speed reducer in which an increase in mechanical loss is suppressed while a lost motion is reduced as described above as compared to a case where Expression (2) is not satisfied while the inter-tooth clearance X3 is set to be negative.

Further, in the speed reducer 10 according to the present embodiment, Expression (1) is satisfied while the pin hole clearance X2 is set to be negative, and Expression (2) is satisfied while the inter-tooth clearance X3 is set to be negative. Accordingly, it is possible to realize an eccentric oscillation type speed reducer in which an increase in mechanical loss is further suppressed while a lost motion is further reduced.

In order to achieve both a low lost motion and a low mechanical loss, it is only necessary to perform the sizing of related components so as to satisfy at least one of the first and second conditions described above. Therefore, sizing work can be facilitated. The sizing mentioned here refers to work for adjusting dimensions via the exchange or machining of components.

According to the above-mentioned configuration, it can be said that an eccentric oscillation type speed reducer achieving both a low lost motion and a low mechanical loss (high transmission efficiency) can be realized.

Next, other features of the speed reducer 10 will be described. The inter-tooth clearance X3 is preferably definitely larger than the pin hole clearance X2. It can be said that the speed reducer 10 is preferably adapted to satisfy the following expression (3). The reason for this will be described.

```
Inter-tooth clearance X3 > pin hole clearance X2 ...
```

(3)

In a case where the external gear 16 is to be disposed at a target position for the assembling of the speed reducer 10, it is necessary to move the external gear 16 and the internal gear 18 in the axial direction while finely aligning the position of the external tooth portion of the external gear 16 with the internal tooth portion of the internal gear 18 in a state where the respective gears 16 and 18 mesh with each other. The target position mentioned here refers to a target position where a member (here, the external gear 16) mentioned in the speed reducer 10 as a finished product should be present. On the other hand, in a case where the pin body 22 is to be disposed at a target position for the assembling of the speed reducer 10, it is sufficient to simply move the pin body 22 in the axial direction without the fine alignment to be performed in the case where the external gear 16 is to be disposed at the target position. That is, in a case where the external gear 16 is to be disposed at the target position, it is necessary to finely align the external gear 16 under an environment in which frictional resistance is applied from the internal gear 18. For this reason, work difficulty is high as compared to a case where the pin body 22 is to be disposed at the target position.

Here, in the present embodiment, the inter-tooth clearance X3 is set to be definitely larger than the pin hole clearance X2. Accordingly, since frictional resistance applied from the internal gear 18 can be reduced in a case where the external gear 16 having high work difficulty is disposed at the target position, the workability thereof can be improved. Further, even though the pin hole clearance X2 is set to be smaller than the inter-tooth clearance X3, it is possible to suppress an influence on workability in a case where the pin body 22 having low work difficulty is disposed at the target position.

In a case where the plurality of external gears 16 and the internal gear 18 are combined, the conditions described so far may be satisfied in a combination of at least one external gear 16 and the internal gear 18. In the present embodiment, the conditions are satisfied in a combination of all the external gears 16 and the internal gear 18. Further, the condition of the pin hole clearance X2 described so far may be satisfied in a combination of at least one pin body 22 and at least one pin hole 32 in a combination of the plurality of pin bodies 22 and the plurality of pin holes 32. In the present embodiment, the condition of the pin hole clearance X2 is satisfied in a combination of all the pin bodies 22 and all the pin holes 32.

Next, modification examples of each component described so far will be described.

The casing 24 may be used as an output member instead of the carrier 26. Specific examples of a combination of a tooth profile of the external gear 16 and a tooth profile of the internal gear 18 are not particularly limited. For example, combinations of various tooth profiles, such as a combination of a trochoid tooth profile and an arc tooth profile and a combination of involute tooth profiles, may be employed as these specific examples.

An example in which the speed reducer 10 is adapted to satisfy both the first condition in which the pin hole clearance X2 is negative and Expression (1) is satisfied and the second condition in which the inter-tooth clearance X3 is negative and Expression (2) is satisfied has been described so far. The present invention is not limited thereto, and the speed reducer 10 may be adapted to satisfy at least one condition of the first and second conditions. The inter-tooth clearance X3 may be equal to or smaller than the pin hole clearance X2. Further, the inter-tooth clearance X3 may be set to be definitely larger than the pin hole clearance X2, and the inter-tooth clearance X3 may be positive.

The above-described embodiment and modification examples are exemplary. The technical ideas that abstract these should not be construed as being limited to the contents of the embodiment and the modification examples. Many design changes, such as a change, addition, and deletion of a component are possible with respect to the contents of the embodiment and the modification examples as far as they fall under the definition of the appended claims. In the embodiment described above, the expression of "embodiment" is added to emphasize the contents that allow such design changes. However, design changes are allowed even in the contents in which there is no such expression. Hatching applied to a cross-section in the drawing does not limit the material of a hatched object. A component formed of a single member in the embodiment may be formed of a plurality of members. Likewise, a component formed of a plurality of members in the embodiment may be formed of a single member.

Brief Description of the Reference Symbols

10: Eccentric oscillation type speed reducer
12: Eccentric body
16: External gear
18: Internal gear
20: Eccentric bearing
22: Pin body
32: Pin hole

**Claims**

1. An eccentric oscillation type speed reducer (10) comprising:

an eccentric body (12);
an external gear (16) that is made to oscillate by the eccentric body (12);
an internal gear (18) that meshes with the external gear (16);
an eccentric bearing (20) that is disposed between the eccentric body (12) and the external gear (16); and

a pin body (22) that is synchronized with an axial rotation component of the external gear (16),
wherein the external gear (16) includes a pin hole (32) which is provided to be offset from a center (C16) of the external gear (16) in a radial direction and into which the pin body (22) is inserted,
**characterized in that**
in a case where an internal clearance of the eccentric bearing (20) in the radial direction is referred to as an eccentric bearing clearance X1 and a clearance between the pin body (22) and the pin hole (32) in an anti-maximum eccentric direction (Db) from an axial center (C22) of the pin body (22) in a case where the axial center (C22) of the pin body (22) is in a maximum eccentric direction (Da) is referred to as a pin hole clearance X2, the pin hole clearance X2 is negative and the following expression (1) is satisfied, eccentric bearing clearance X1 + pin hole clearance X2 > 0       (1)

2. The eccentric oscillation type speed reducer (10) according to claim 1,
wherein in a case where a clearance between the external gear (16) and the internal gear (18) in the maximum eccentric direction (Da) is referred to as an inter-tooth clearance X3, the inter-tooth clearance X3 is negative and the following expression (2) is satisfied, eccentric bearing clearance X1 + inter-tooth clearance X3 > 0       (2)

3. The eccentric oscillation type speed reducer (10) according to claim 1 or 2,
wherein in a case where a clearance between the external gear (16) and the internal gear (18) in the maximum eccentric direction (Da) is referred to as an inter-tooth clearance X3, the inter-tooth clearance X3 is definitely larger than the pin hole clearance X2.

4. An eccentric oscillation type speed reducer (10) comprising:

an eccentric body (12);
an external gear (16) that is made to oscillate by the eccentric body (12);
an internal gear (18) that meshes with the external gear (16);
an eccentric bearing (20) that is disposed between the eccentric body (12) and the external gear (16); and
a pin body (22) that is synchronized with an axial rotation component of the external gear (16),
wherein the external gear (16) includes a pin hole (32) which is provided to be offset from a center (C16) of the external gear (16) in a radial direction and into which the pin body (22) is inserted,
**characterized in that**
in a case where an internal clearance of the eccentric bearing (20) in a maximum eccentric direction (Da) is referred to as an eccentric bearing clearance X1 and a clearance between the external gear (16) and the internal gear (18) in the maximum eccentric direction (Da) is referred to as an inter-tooth clearance X3, the inter-tooth clearance X3 is negative and the following expression (2) is satisfied, eccentric bearing clearance X1 + inter-tooth clearance X3 > 0       (2).

5. The eccentric oscillation type speed reducer (10) according to claim 4,
wherein in a case where a clearance between the pin body (22) and the pin hole (32) in an anti-maximum eccentric direction (Db) from an axial center (C22) of the pin body (22) in a case where the axial center (C22) of the pin body (22) is in the maximum eccentric direction (Da) is referred to as a pin hole clearance X2, the inter-tooth clearance X3 is definitely larger than the pin hole clearance X2.

**Patentansprüche**

1. Drehzahlminderer vom exzentrischen Oszillationstyp (10) umfassend:

einen Exzenterkörper (12);

ein Außenzahnrad (16), das durch den Exzenterkörper (12) in Oszillation versetzt wird;
ein Innenzahnrad (18), das in das Außenzahnrad (16) eingreift;
ein Exzenterlager (20), das zwischen dem Exzenterkörper (12) und dem Außenzahnrad (16) angeordnet ist; und
einen Stiftkörper (22), der mit einer axialen Drehkomponente des Außenzahnrads (16) synchronisiert ist,
wobei das Außenzahnrad (16) eine Stiftbohrung (32) aufweist, die in einer radialen Richtung versetzt von einer Mitte (C16) des Außenzahnrads (16) vorgesehen ist und in die der Stiftkörper (22) eingesetzt ist,
**dadurch gekennzeichnet, dass**
in einem Fall, in dem ein inneres Spiel des Exzenterlagers (20) in radialer Richtung als ein Exzenterlagerspiel X1 bezeichnet wird und ein Spiel zwischen dem Stiftkörper (22) und der Stiftbohrung (32) in einer anti-maximalen Exzenterrichtung (Db) von einer axialen Mitte (C22) des Stiftkörpers (22) in einem Fall, bei dem sich die axiale Mitte (C22) des Stiftkörpers (22) in einer maximalen Exzenterrichtung (Da) befindet, als ein Stiftlochspiel X2 bezeichnet wird, das Stiftlochspiel X2 negativ ist und die folgende Gleichung (1) erfüllt ist:

Exzentrisches Lagerspiel X1 + Stiftlochspiel X2 > 0     (1)

2. Drehzahlminderer vom exzentrischen Oszillationstyp (10) nach Anspruch 1,
wobei in einem Fall, bei dem ein Spiel zwischen dem Außenzahnrad (16) und dem Innenzahnrad (18) in der maximalen Exzenterrichtung (Da) als ein Zwischenzahnspiel X3 bezeichnet wird, das Zwischenzahnspiel X3 negativ ist und die folgende Gleichung (2) erfüllt ist:

Exzentrisches Lagerspiel X1 + Zwischenzahnspiel X3 > 0     (2)

3. Drehzahlminderer vom exzentrischen Oszillationstyp (10) nach Anspruch 1 oder 2,
wobei in einem Fall, bei dem ein Spiel zwischen dem Außenzahnrad (16) und dem Innenzahnrad (18) in der maximalen Exzenterrichtung (Da) als ein Zwischenzahnspiel X3 bezeichnet wird, das Zwischenzahnspiel X3 definitiv größer ist als das Stiftlochspiel X2.

4. Drehzahlminderer vom exzentrischen Oszillationstyp (10), umfassend:

einen Exzenterkörper (12);
ein Außenzahnrad (16), das durch den Exzenterkörper (12) in Oszillation versetzt wird;
ein Innenzahnrad (18), das in das Außenzahnrad (16) eingreift;
ein Exzenterlager (20), das zwischen dem Exzenterkörper (12) und dem Außenzahnrad (16) angeordnet ist; und
einen Stiftkörper (22), der mit einer axialen Drehkomponente des Außenzahnrads (16) synchronisiert ist,
wobei das Außenzahnrad (16) eine Stiftbohrung (32) aufweist, in einer radialen Richtung versetzt von einer Mitte (C16) des Außenzahnrads (16) vorgesehen ist und in die der Stiftkörper (22) eingesetzt ist,
**dadurch gekennzeichnet, dass**
in einem Fall, in dem ein inneres Spiel des Exzenterlagers (20) in einer maximalen Exzenterrichtung (Da) als ein Exzenterlagerspiel X1 bezeichnet wird und ein Spiel zwischen dem Außenzahnrad (16) und dem Innenzahnrad (18) in der maximalen Exzenterrichtung (Da) als ein Zwischenzahnspiel X3 bezeichnet wird, das Zwischenzahnspiel X3 negativ ist und die folgende Gleichung (2) erfüllt ist:

Exzenterlagerspiel X1 + Zwischenzahnspiel X3 > 0 ..

(2).

5. Drehzahlminderer vom exzentrischen Oszillationstyp (10) nach Anspruch 4,
wobei in einem Fall, in dem ein Spiel zwischen dem Stiftkörper (22) und dem Stiftloch (32) in einer anti-maximalen Exzenterrichtung (Db) von einer axialen Mitte (C22) des Stiftkörpers (22) in einem Fall, bei dem die axiale Mitte (C22) des Stiftkörpers (22) in der maximalen Exzenterrichtung (Da) ist, als ein Stiftlochspiel X2 bezeichnet wird, das Zwischenzahnspiel X3 definitiv größer ist als das Stiftlochspiel X2.

**Revendications**

1. Un réducteur de vitesse du type à oscillation excentrique (10) comprenant :

   un corps excentrique (12) ;
   un engrenage externe (16) qui est amené à osciller grâce au corps excentrique (12) ;
   un engrenage interne (18) qui s'engrène avec l'engrenage externe (16) ;
   un palier excentrique (20) qui est disposé entre le corps excentrique (12) et l'engrenage externe (16) ; et
   un corps de broche (22) qui est synchronisé avec un composant de rotation axiale de l'engrenage externe (16),
   dans lequel l'engrenage externe (16) inclut un trou de broche (32) qui est prévu pour être décalé par rapport à un centre (C16) de l'engrenage externe (16) dans une direction radiale et dans lequel le corps de broche (22) est inséré,
   **caractérisé en ce que**
   dans un cas où un jeu interne du palier excentrique (20) dans la direction radiale est appelé un jeu de palier excentrique X1 et un jeu entre le corps de broche (22) et le trou de broche (32) dans une direction excentrique anti-maximale (Db) par rapport à un centre axial (C22) du corps de broche (22) dans un cas où le centre axial (C22) du corps de broche (22) est dans une direction excentrique maximale (Da) est appelé un jeu de trou de broche X2, le jeu de trou de broche X2 est négatif et l'expression suivante (1) est satisfaite,

$$\text{jeu de palier excentrique } X1 + \text{jeu de trou de broche } X2 > 0 \ldots (1).$$

2. Le réducteur de vitesse du type à oscillation excentrique (10) selon la revendication 1,
   dans lequel dans un cas où un jeu entre l'engrenage externe (16) et l'engrenage interne (18) dans la direction excentrique maximale (Da) est appelé un jeu inter-dentaire X3, le jeu inter-dentaire X3 est négatif et l'expression suivante (2) est satisfaite,

$$\text{jeu de palier excentrique } X1 + \text{jeu inter-dentaire } X3 > 0 \ldots (2).$$

3. Le réducteur de vitesse du type à oscillation excentrique (10) selon la revendication 1 ou 2,
   dans lequel dans un cas où un jeu entre l'engrenage externe (16) et l'engrenage interne (18) dans la direction excentrique maximale (Da) est appelé un jeu inter-dentaire X3, le jeu inter-dentaire X3 est nettement plus grand que le jeu de trou de broche X2.

4. Un réducteur de vitesse du type à oscillation excentrique (10) comprenant :

   un corps excentrique (12) ;
   un engrenage externe (16) qui est amené à osciller grâce au corps excentrique (12) ;
   un engrenage interne (18) qui s'engrène avec l'engrenage externe (16) ;
   un palier excentrique (20) qui est disposé entre le corps excentrique (12) et l'engrenage externe (16) ; et
   un corps de broche (22) qui est synchronisé avec un composant de rotation axiale de l'engrenage externe (16),
   dans lequel l'engrenage externe (16) inclut un trou de broche (32) qui est prévu pour être décalé par rapport à un centre (C16) de l'engrenage externe (16) dans une direction radiale et dans lequel le corps de broche (22) est inséré,
   **caractérisé en ce que**
   dans un cas où un jeu interne du palier excentrique (20) dans une direction excentrique maximale (Da) est appelé un jeu de palier excentrique X1 et un jeu entre l'engrenage externe (16) et l'engrenage interne (18) dans la direction excentrique maximale (Da) est appelé un jeu inter-dentaire X3, le jeu inter-dentaire X3 est négatif et l'expression suivante (2) est satisfaite,

$$\text{jeu de palier excentrique } X1 + \text{jeu inter-dentaire } X3 > 0 \ldots (2).$$

5. Le réducteur de vitesse du type à oscillation excentrique (10) selon la revendication 4,
   dans lequel dans un cas où un jeu entre le corps de broche (22) et le trou de broche (32) dans une direction excentrique anti-maximale (Db) par rapport à un centre axial (C22) du corps de broche (22) dans un cas où le centre axial (C22) du corps de broche (22) est dans la direction excentrique maximale (Da) est appelé un jeu de trou de broche X2, le jeu inter-dentaire X3 est nettement plus grand que le jeu de trou de broche X2.

# FIG. 1

# FIG. 2

## FIG. 3

FIG. 4

# FIG. 5

**EP 4 386 231 B1**

**Patent documents cited in the description**

- JP 2022082891 A